# EUROPÄISCHE PATENTSCHRIFT

(11) **EP 0 737 558 B1**
(45) Veröffentlichungstag und Bekanntmachung des Hinweises auf die Patenterteilung: **22.09.1999**
(21) Anmeldenummer: 96103783.5
(22) Anmeldetag: 11.03.1996
(51) Int. Cl.: B29C 45/14, F16C 11/06

(54) **Verfahren zur Herstellung eines Kugelgelenkes und zugehörige Lagerschale**
Method for producing a ball joint and associated lining
Procédé de fabrication d'un joint à rotule et garniture associée

(30) Priorität: 11.04.1995 DE 19513714
(43) Veröffentlichungstag der Anmeldung: 16.10.1996
(73) Patentinhaber: TRW Fahrwerksysteme GmbH & Co. KG, 40547 Düsseldorf (DE)
(72) Erfinder: Dorr, Christoph, Dipl.-Ing., 40667 Meerbusch (DE)
(74) Vertreter: Stenger, Watzke & Ring Patentanwälte

(56) Entgegenhaltungen:
- DE-A- 4 009 156
- GB-A- 976 410

## Beschreibung

Die Erfindung betrifft ein Verfahren zur Herstellung eines aus Kugelzapfen, Lagerschale und Gelenkgehäuse bestehenden, mit einem zwischen Gelenkgehäuse und Kugelzapfen angeordneten Dichtungsbalg zu versehenden Kugelgelenkes, insbesondere für Kraftfahrzeuge, durch Umspritzen des mit der auf die Gelenkkugel aufgesetzten Lagerschale versehenen Kugelzapfens mit Kunststoff in einer geteilten Spritzgußform sowie eine zur Verwendung in diesem Verfahren bestimmte Lagerschale.

Ein Verfahren zur Herstellung eines aus Kugelzapfen, Lagerschale und Gelenkgehäuse bestehenden Kugelgelenkes ist aus der DE 40 09 156 A1 bekannt. Bei diesem bekannten Verfahren wird der Kugelzapfen, nachdem die Lagerschale auf die Gelenkkugel aufgesetzt worden ist, in eine geteilte Spritzgießform eingelegt und zur Herstellung des Gelenkgehäuses mit Kunststoff umspritzt. Da der Kunststoff mit hohem Druck in die Form eingebracht wird, besteht die Gefahr, daß Kunststoff zwischen die Lagerschale und die Gelenkkugel des Kugelgelenkes gelangt, so daß das Kugelgelenk unbrauchbar wird und das Fetten der Schale vor dem Spritzgießen nicht möglich ist. Nach der Funktionsprüfung des der Spritzgießform entnommenen Kugelgelenkes ist es weiterhin erforderlich, das Gelenk zu fetten und den zwischen Gelenkgehäuse und Kugelzapfen anzuordnenden Dichtungsbalg zu montieren, indem sein gehäuseseitiger Öffnungswulst in eine bei der Herstellung des Gelenkgehäuses ausgebildete Nut und sein zapfenseitiger Öffnungswulst in eine am Kugelzapfen ausgebildete Nut eingelegt und durch einen Spannring gesichert werden.

Der Erfindung liegt die **Aufgabe** zugrunde, unter Vermeidung der Nachteile des bekannten Verfahrens ein hochbelastbares Kugelgelenk zu schaffen und die zu dessen Komplettierung erforderlichen Montagearbeiten zu verringern.

Die **Lösung** dieser Aufgabenstellung durch die Erfindung ist dadurch gekennzeichnet, daß vor dem Einlegen des Kugelzapfens in die Spritzgießform der Dichtungsbalg mit seinem gehäuseseitigen Öffnungswulst an der Lagerschale positioniert und durch das Umspritzen zwischen Lagerschale und Gehäuse festgelegt wird.

Durch den bereits vor dem Einlegen des Kugelzapfens in die Spritzgießform mit seinem gehäuseseitigen Öffnungswulst an der Lagerschale festgelegten Dichtungsbalg ergibt sich beim Einlegen in die Spritzgießform bei entsprechender Gestaltung des Spritzgießwerkzeuges eine wirkungsvolle Abdichtung des für die Herstellung des Gelenkgehäuses in der Spritzgießform ausgebildeten Hohlraumes gegenüber dem gesamten Kugelgelenk, weil das dauerelastische Material des Dichtungsbalges eine zuverlässige Abdichtung gewährleistet. Gleichzeitig wird der gehäuseseitige Öffnungswulst des Dichtungsbalges bereits bei der Herstellung des Gelenkgehäuses an diesem festgelegt, so daß ein späterer aufwendiger Montagevorgang entfällt. Das erfindungsgemäße Verfahren beseitigt somit nicht nur die hinsichtlich der Gefahr von Undichtigkeiten bestehenden Nachteile des bekannten Verfahrens, sondern vermeidet einen Teil der späteren Montagevorgänge sowie die zusätzliche Verwendung eines Spannringes.

Gemäß einem weiteren Merkmal der Erfindung wird der zapfenseitige Öffnungswulst des Dichtungsbalges vor dem Einlegen des Kugelzapfens in die Spritzgießform auf einer auf den Gewindezapfen des Kugelzapfens aufgesetzten Abdeckbüchse festgelegt. Hierdurch ergibt sich eine gestreckte, straffe und durchmesserreduzierte Lage des Dichtungsbalges in der Spritzgießform, die eine gute Positionierung des Balges beim Einlegen in die Spritzgießform gewährleistet und damit sowohl eine zuverlässige Abdichtung des Dichtspaltes zwischen Spritzgießwerkzeug und Schale als auch eine sichere Festlegung zwischen Schale und Gehäuse garantiert.

Um nach der Entnahme des mit dem Gelenkgehäuse versehenen Kugelgelenkes aus der Spritzgießform die Endmontage des Dichtungsbalges zu erleichtern, wird mit der Erfindung weiterhin vorgeschlagen, den zapfenseitigen, durch einen Spannring belasteten Öffnungswulst nach der Entnahme des fertigen Kugelgelenks aus der Spritzgießform über einen an der Abdeckbüchse ausgebildeten konischen Übergang in eine in einem Bund des Kugelzapfens ausgebildete Aufnahmenut zu schieben. Der konische Übergang der Abdeckbüchse erleichtert hierbei die Endmontage des Dichtungsbalges.

Durch die Festlegung beider Öffnungswulste des Dichtungsbalges während des Spritzgießvorganges wird innerhalb des Dichtungsbalges ein abgeschlossener Hohlraum gebildet, der gemäß einem weiteren Merkmal der Erfindung vor dem Einsetzen des Kugelzapfens in die Spritzgießform mit einer Schmierstoff-Füllung versehen werden kann, so daß das erfindungsgemäß hergestellte Kugelgelenk bereits vor seiner endgültigen Herstellung mit den notwendigen Schmierstoff versehen werden kann. Es entfällt auf diese Weise eine nachträgliche Einbringung von Schmierstoff.

Bei einer bevorzugten Ausführungsform des erfindungsgemäßen Verfahrens wird der Kunststoff mittels eines Niederdruck-Spritzgießverfahrens, vorzugsweise eines Gasinnendruck-Spritzgießverfahrens oder eines Zweikomponenten-Verfahrens mit einer Schaumkomponente eingebracht. Die hierbei angewendeten niedrigen Drücke verringern nicht nur die Gefahr des Entstehens von Undichtigkeiten, sondern verbilligen auch die maschinelle Einrichtung zur Durchführung des Verfahrens.

Da bei dem mit dem erfindungsgemäßen Verfahren hergestellten Kugelgelenk eine 100%-ige Abdeckung des zur Bildung des Gelenkgehäuses verwendeten Kunststoffes gegenüber der Gelenkkugel durch die Lagerschale und den Dichtungsbalg erfolgt, kann gemäß einem weiteren Merkmal der Erfindung als Kunststoff ein verstärkter Kunststoff verwendet werden, weil die im Kunststoff eingebetteten Armierungsstoffe keine Gefahr für eine Beschädigung der kugelförmigen Lagerfläche der Gelenkkugel darstellen. Durch die Verwendung eines verstärkten Kunststoffes erhöht sich die Belastbarkeit des erfindungsgemäß hergestellten Kugelgelenkes.

Die zur Verwendung in dem erfindungsgemäßen Verfahren bestimmte Lagerschale ist gemäß der Erfindung dadurch gekennzeichnet, daß der die Öffnung umgebende Rand der Lagerschale mit einer ringförmigen Anlagefläche für den Innenrand des gehäuseseitigen Öffnungswulstes des Dichtungsbalges versehen ist. Auf diese Weise wird eine zuverlässige Position des Dichtungsbalges auf der Lagerschale erreicht, wenn der mit der Lagerschale versehene Kugelzapfen in die Spritzgießform eingelegt wird.

Bei einer bevorzugten Ausführungsform ist die Anlagefläche an einer schräg nach außen verlaufenden, zugleich einen Anschlag für den Verschwenkbereich des Kugelzapfens bildenden Verlängerung der Lagerschale ausgebildet.

Um die mit dem Gelenkgehäuse zu umspritzende Lagerschale in der Spritzgießform zu positionieren, kann gemäß einem weiteren Merkmal der Erfindung das Spritzgießwerkzeug im Bereich, in dem der Dichtungsbalg zur Abdichtung des Hohlraumes anliegt, derart gestaltet sein, daß er in Zusammenwirkung mit einer entsprechend geformten Verlängerung der Kugelschale diese in einer definierten Position im Spritzgießwerkzeug festlegt. Zusätzlich kann zu diesem Zweck die Lagerschale mit einem der Öffnung gegenüberliegenden, zapfenartig an ihrer Außenseite angeformten Vorsprung versehen werden.

Eine weitere Lagesicherung der Lagerschale im fertigen Gelenkgehäuse kann erfindungsgemäß durch auf der Außenseite der Lagerschale ausgebildete Erhöhungen und/oder Vertiefungen erfolgen. Die Erhöhungen und/oder Vertiefungen können vorzugsweise rippenartig auf mindestens einem Breitenkreis der Lagerschale verlaufen, wodurch eine Sicherung gegen ein Verrutschen der Lagerschale gegenüber dem Gelenkgehäuse in Richtung der Kugelzapfenachse geschaffen wird. Weitere rippenartige, auf mindestens einem Längenkreis der Lagerschale verlaufende Erhöhungen und/oder Vertiefungen werden verwendet, um ein Verdrehen der Lagerschale gegenüber dem Gelenkgehäuse um die Mittellängsachse des Kugelgelenkes zu verhindern und um die Kugelschale zu versteifen, damit sie sich durch den Spritzdruck beim Spritzgießen des Gehäuses nicht deformiert, insbesondere nicht im Bereich der Polfläche der Gelenkkugel.

Auf der Zeichnung ist ein Ausführungsbeispiel eines nach dem erfindungsgemäßen Verfahren und unter Verwendung einer erfindungsgemäßen Lagerschale hergestellten Kugelgelenkes dargestellt, und zwar zeigen:
- Fig. 1: einen Längsschnitt durch einen in die untere Hälfte einer Spritzgießform eingelegten, mit der Lagerschale und dem Dichtungsbalg versehenen Kugelzapfen vor der Herstellung des Gelenkgehäuses,
- Fig. 2: einen Querschnitt durch die Spritzgießform mit eingelegtem Kugelzapfen gemäß der Schnittlinie II-II in Fig. 1 und
- Fig. 3: einen Längsschnitt durch das fertige Kugelgelenk.

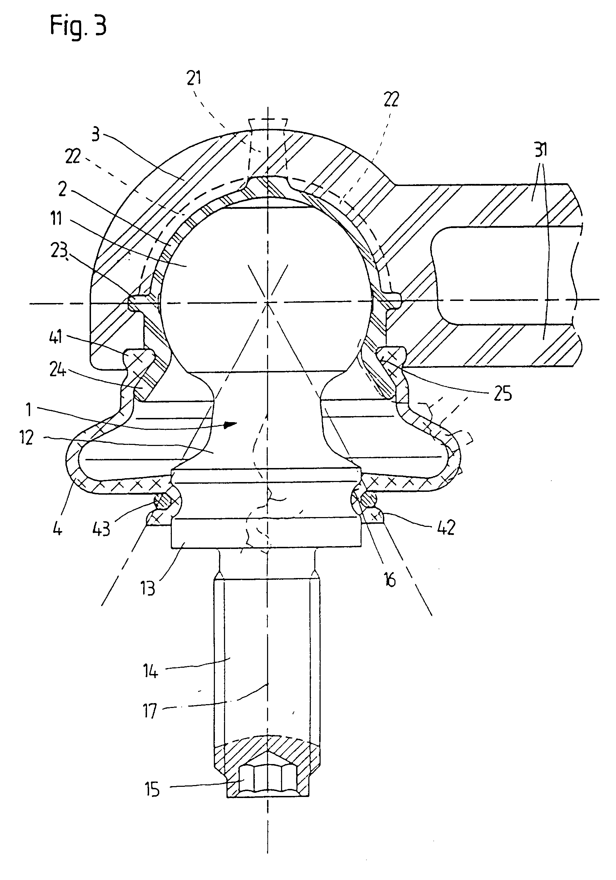

Das fertige Kugelgelenk gemäß Fig. 3 besteht aus einem Kugelzapfen 1, einer Lagerschale 2, einem einstückig mit einer Fahrwerkstrebe 31 ausgebildeten Gelenkgehäuse 3 und einem Dichtungsbalg 4.

Der Kugelzapfen 1 umfaßt eine Gelenkkugel 11, die mittels eines Überganges 12 in einen zylindrischen Bund 13 übergeht, an den ein Gewindezapfen 14 angeformt ist. In der Stirnfläche des Gewindezapfens 14 ist ein Innensechskant 15 als Schlüsselfläche eingeformt. Der Bund 13 ist mit einer ringförmigen Aufnahmenut 16 versehen.

Die zur Lagerung des Kugelzapfens 1 über dessen Gelenkkugel 11 dienende Lagerschale 2 ist formschlüssig im Gelenkgehäuse 3 gehalten. Sie ist zu diesem Zweck an ihrer äußeren, kugelförmigen Oberfläche mit einer längs dem Äquator verlaufenden, ringförmigen Erhöhung 23 versehen, die ein Verrutschen der Lagerschale 2 in Richtung der Kugelzapfenachse 17 verhindert, sowie mit rippenartigen Erhöhungen 22 entlang der Längenkreise der Kugelschalenoberfläche, die ein Verdrehen der Lagerschale 2 um die Kugelzapfenachse 17 im Gehäuse verhindern.

Diese Rippen dienen außerdem zur Versteifung der Lagerschale 2, um deren Verformung - besonders im Bereich der Abflachung im Polbereich der Kugel 11 - während des Spritzgießens durch den hohen Druck und die hohe Temperatur der Kunststoffschmelze zu verhindern.

Der die Öffnung der Lagerschale 2 umgebende Rand ist mit einer schräg nach außen verlaufenden Verlängerung 24 versehen, deren kegelförmige Innenfläche als Anschlag für die Verschwenkbewegung des Kugelzapfens 1 dient. Der maximale Schwenkwinkels des Kugelzapfens 1 gegenüber dem Gelenkgehäuse 3 und damit der Lagerschale 2 ist durch strichpunktierte Linien in Fig. 3 eingezeichnet.

Die Außenseite der Verlängerung 24 bildet eine ringförmige Anlagefläche 25 für einen gehäuseseitigen Öffnungswulst 41 des Dichtungsbalges 4, der mit einem zapfenseitigen Öffnungswulst 42 in die Aufnahmenut 16 des Kugelzapfens 2 eingesetzt wird, und zwar unter Verwendung eines Spannringes 43.

Zur Herstellung des voranstehend beschriebenen Kugelgelenkes wird als erstes auf die Gelenkkugel 11 des Kugelzapfens 1 die Lagerschale 2 aufgesetzt. Anschließend wird der gehäuseseitige Öffnungswulst 41 in die ringförmige Anlagefläche 25 der Lagerschale 2 eingesetzt. Der zapfenseitige Öffnungswulst 42 des Dichtungsbalges 4 gelangt hierbei auf einen konischen Übergang 51 einer Abdeckbüchse 5, die über den Gewindezapfen 14 des Kugelzapfens 1 bis zum Anschlag an der Unterseite des Bundes 13 geschoben worden ist, wodurch er straff gestreckt und im Durchmesser reduziert wird und so das Einlegen in die Spritzgießform 6 sowie die Abdichtung durch den gehäuseseitigen Öffnungswulst 41 des Dichtungsbalges 4 zuverlässig erfüllen kann.

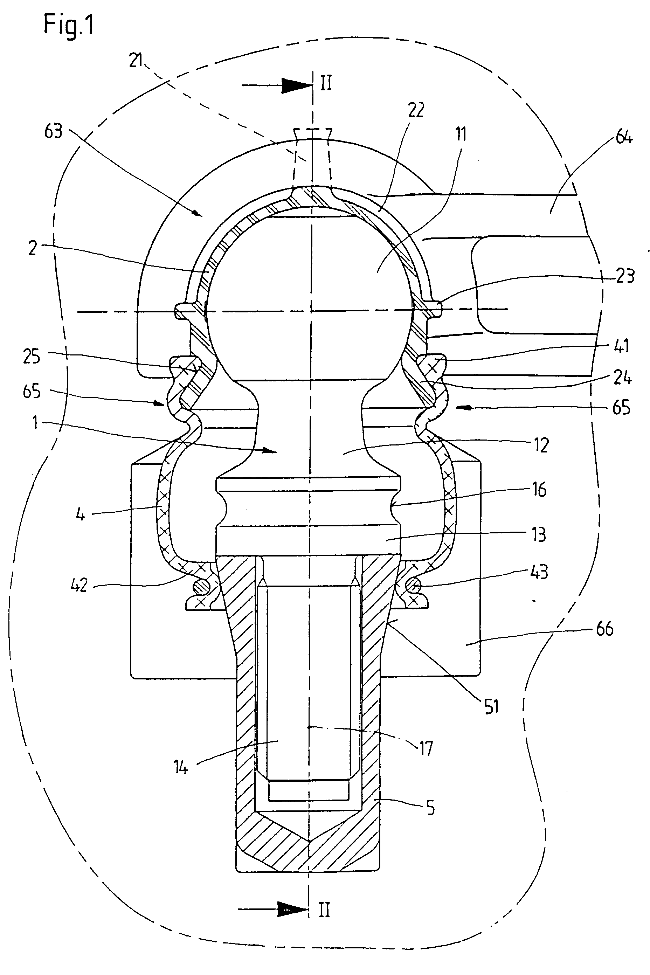

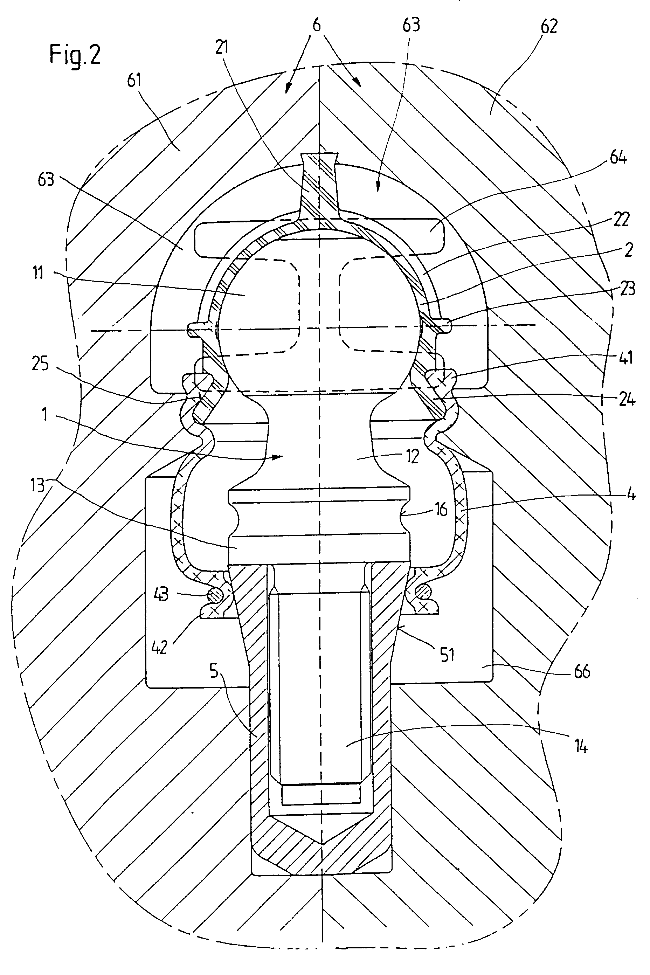

In diesem Zustand werden Kugelzapfen 1, Lagerschale 2, Dichtungsbalg 4 und Abdeckbüchse 5 in eine zweiteilige Spritzgießform 6 eingelegt. Die beiden Hälften 61 und 62 dieser Spritzgießform 6 sind im Querschnitt der Fig. 2 zu erkennen. In Fig. 1 ist die Draufsicht auf die untere Hälfte 61 der Spritzgießform 6 gezeichnet.

Beide Zeichnungen lassen erkennen, daß die Spritzgießform 6 einen die Lagerschale 2 umgebenden Hohlraum 63 aufweist, der in einen der Außenkontur der Fahrwerkstrebe 31 entsprechenden Hohlraum 64 übergeht (siehe Fig. 1). Beide Hohlräume 63 und 64 sind durch das elastische Material des Dichtungsbalges 4 gegenüber der Verlängerung 24 der Lagerschale 2 abgedichtet. In diesem Bereich ist der Dichtungsbalg 4 vollständig von einer entsprechenden Stützfläche 65 der beiden Hälften 61 und 62 der Spritzgießform 6 umgeben. Diese Stützfläche 65 ist so geformt, daß sie im Zusammenwirken mit der entsprechend geformten Verlängerung 24 der Kugelschale 2 nicht nur durch Einquetschen des Dichtungsbalges 4 die Hohlräume 63 und 64 abdichtet, sondern gleichzeitig die Lagerschale 2 in der Spritzgießform 6 in einer definierten Lage fixiert. Diese Fixierung kann unterstützt werden durch einen zapfenartigen Vorsprung 21 im außenliegenden Polbereich der Lagerschale 2. Der sich an den zwischen der Spritzgießform 6 und der Lagerschale 2 eingeklemmten Öffnungswulst 41 anschließende und durch die Abdeckbüchse 5 gestreckte und im Durchmesser reduzierte Teil des Dichtungsbalges 4 bis zum zapfenseitigen Öffnungswulst 42 findet in einer beim Ausführungsbeispiel zylindrischen Aussparung 66 der Spritzgießform 6 Platz.

Nach dem Schließen der Spritzgießform 6 wird vorzugsweise glasfaserverstärkter Kunststoff mittels eines Niederdruck-Spritzgießverfahrens, vorzugsweise nach dem Gasinnnendruck-Spritzgießverfahren oder nach einem Zweikomponenten-Verfahren mit einer Schaumkomponente in die Hohlräume 63 und 64 der Spritzgießform 6 eingebracht, so daß das Gelenkgehäuse 3 einstückig mit der Fahrwerkstrebe 31 hergestellt wird. Bei dieser Herstellung wird gleichzeitig der gehäuseseitige Öffnungswulst 41 des Dichtungsbalges 4 zwischen Lagerschale 2 und Gelenkgehäuse 3 eingeformt. Außerdem ergibt sich durch die rippenförmigen und ringförmigen Erhöhungen 22 und 23 der Lagerschale 2 eine formschlüssige Festlegung der Lagerschale 2 innerhalb des Gelenkgehäuses 3.

Nach Öffnen der Spritzgießform 6 wird das Kugelgelenk nahezu fertig montiert entnommen. Es ist lediglich noch erforderlich, den auf dem konischen Übergang 51 der Abdeckbüchse 5 liegenden zapfenseitigen Öffnungswulst 42 über den konischen Übergang 51 in die Aufnahmenut 16 des Kugelzapfens 1 zu schieben. Da der vom Dichtungsbalg 4 umschlossene Raum vor dem Einsetzen des Kugelzapfens 1 in die Spritzgießform 6 mit einer Schmierstoff-Füllung versehen worden sein kann, ist das Kugelgelenk nach Abnahme der Abdeckbüchse 5 montagefertig.

### Bezugszeichenliste

- 1: Kugelzapfen
- 11: Gelenkkugel
- 12: Übergang
- 13: Bund
- 14: Gewindezapfen
- 15: Innensechskant
- 16: Aufnahmenut
- 17: Mittellängsachse
- 2: Lagerschale
- 21: Vorsprung
- 22: Erhöhung
- 23: Erhöhung
- 24: Verlängerung
- 25: Lagerfläche
- 3: Gelenkgehäuse
- 31: Fahrwerkstrebe
- 4: Dichtungsbalg
- 41: Öffnungswulst
- 42: Öffnungswulst
- 43: Spannring
- 5: Abdeckbüchse
- 51: Übergang
- 6: Spritzgießform
- 61: Hälfte
- 62: Hälfte
- 63: Hohlraum
- 64: Hohlraum
- 65: Stützfläche
- 66: Aussparung

## Patentansprüche

1. Verfahren zur Herstellung eines aus Kugelzapfen (1), Lagerschale (2) und Gelenkgehäuse (3) bestehenden, mit einem zwischen Gelenkgehäuse (3) und Kugelzapfen (1) angeordneten Dichtungsbalg (4) zu versehenden Kugelgelenkes, insbesondere für Kraftfahrzeuge, durch Umspritzen des mit der auf die Gelenkkugel (11) aufgesetzten Lagerschale (2) versehenen Kugelzapfens (1) mit Kunststoff in einer geteilten Spritzgießform (6),
**dadurch gekennzeichnet**,
daß vor dem Einlegen des Kugelzapfens (1) in die Spritzgießform (6) der Dichtungsbalg (4) mit seinem gehäuseseitigen Öffnungswulst (41) an der Lagerschale (2) positioniert und durch das Umspritzen zwischen Lagerschale (2) und Gehäuse (3) festgelegt wird.

2. Verfahren nach Anspruch 1, dadurch gekennzeichnet, daß der zapfenseitige Öffnungswulst (42) des Dichtungsbalges (4) vor dem Einlegen des Kugelzapfens (1) in die Spritzgießform (6) auf einer auf den Gewindezapfen (14) des Kugelzapfens (1) aufgesetzten Abdeckbüchse (5) festgelegt wird.

3. Verfahren nach Anspruch 2, dadurch gekennzeichnet, daß der zapfenseitige, durch einen Spannring (43) belastete Öffnungswulst (42) nach der Entnahme des fertigen Kugelgelenkes aus der Spritzgießform (6) über einen an der Abdeckbüchse (5) ausgebildeten konischen Übergang (51) in eine in einem Bund (13) des Kugelzapfens (1) ausgebildete Aufnahmenut (16) geschoben wird.

4. Verfahren nach mindestens einem der Ansprüche 1 bis 3, dadurch gekennzeichnet, daß der vom Dichtungsbalg (4) umschlossene Raum vor dem Einsetzen des Kugelzapfens (1) in die Spritzgießform (6) mit einer Schmierstoff-Füllung versehen wird.

5. Verfahren nach mindestens einem der Ansprüche 1 bis 4, dadurch gekennzeichnet, daß der Dichtungsbalg (4) beim Spritzgießvorgang zur Abdichtung des vom Dichtungsbalg (4) umschlossenen Raumes gegenüber der den Formnesthohlraum (63 und 64) ausfüllenden Kunststoffschmelze dient, indem er zwischen der Kugelschale (2) und Spritzgießwerkzeug (6) eingeklemmt wird.

6. Verfahren nach Anspruch 5, dadurch gekennzeichnet, daß das Werkzeug (6) eine Stützfläche (65) zur Abdichtung der Hohlräume (63 und 64) durch den Dichtungsbalg (4) aufweist, die derart gestaltet ist, daß sie in Zusammenwirkung mit einer entsprechend geformten Verlängerung (24) der Kugelschale (2) diese im Spritzgießwerkzeug in einer definierten Lage festlegt.

7. Verfahren nach mindestens einem der Ansprüche 1 bis 6, dadurch gekennzeichnet, daß der Kunststoff mittels eines Niederdruck-Spritzgießverfahrens, vorzugsweise eines Gasinnendruck-Spritzgießverfahrens oder eines Zweikomponenten-Verfahrens mit einer Schaumkomponente eingebracht wird.

8. Verfahren nach mindestens einem der Ansprüche 1 bis 7, dadurch gekennzeichnet, daß als Kunststoff ein verstärkter, vorzugsweise faser- bzw. glasfaserverstärkter thermoplastischer Kunststoff verwendet wird.

9. Lagerschale (2) zur Verwendung in dem Verfahren nach mindestens einem der Ansprüche 1 bis 8, dadurch gekennzeichnet, daß der die Öffnung umgebende Rand der Lagerschale (2) mit einer ringförmigen Lagerfläche (25) für den Innenrand des gehäuseseitigen Öffnungswulstes (41) des Dichtungsbalges (4) versehen ist.

10. Lagerschale (2) nach Anspruch 9, dadurch gekennzeichnet, daß die Anlagefläche (25) an einer schräg nach außen verlaufenden, zugleich einen Anschlag für den Verschwenkbereich des Kugelzapfens (1) bildenden Verlängerung (24) der Lagerschale (2) ausgebildet ist.

11. Lagerschale (2) nach Anspruch 9 oder 10, gekennzeichnet durch einen der Öffnung gegenüberliegenden, zapfenartig an der Außenseite der Lagerschale (2) angeformten Vorsprung (21) zur Lagefixierung der Lageschale (2) in der Spritzgießform (6) und im Gelenkgehäuse (3).

12. Lagerschale (2) nach mindestens einem der Ansprüche 9 bis 11, gekennzeichnet durch auf ihrer Außenseite ausgebildete Erhöhungen (22, 23) und/oder Vertiefungen zur Versteifung der Lagerschale beim Umspritzen und zur Lagesicherung der Lagerschale (2) gegenüber dem Gelenkgehäuse (3).

13. Lagerschale (2) nach Anspruch 12, dadurch gekennzeichnet, daß die Erhöhungen (22) und/oder Vertiefungen rippenartig auf mindestens einem Längenkreis verlaufen.

14. Lagerschale (2) nach Anspruch 12, dadurch gekennzeichnet, daß die Erhöhungen (23) und/oder Vertiefungen rippenartig auf mindestens einem Breitenkreis verlaufen.

## Claims

1. Process for manufacturing a ball joint, particularly for motor vehicles, which consists of a ball pin (1), a bearing bush (2) and a joint housing (3) and is to be provided with a sealing bellows (4) disposed between the joint housing (3) and the ball pin (1), by extrusion-coating the ball pin (1), which is provided with the bearing bush (2) mounted on the joint ball (11), with plastic in a divided injection mould (6), characterised in that,
before the placing of the ball pin (1) in the injection mould (6), the sealing bellows (4) is positioned, with its opening bead (41) which is on the housing side, on the bearing bush (2) and is fixed between the said bearing bush (2) and the housing (3) by the extrusion-coating operation.

2. Process according to claim 1, characterised in that that opening bead (42) of the sealing bellows (4) which is on the pin side is fixed, before the placing of the ball pin (1) in the injection mould (6), on a covering sleeve (5) mounted on the threaded pin (14) of the ball pin (1).

3. Process according to claim 2, characterised in that the opening bead (42) on the pin side, which is loaded by a clamping ring (43), is pushed, after the removal of the finished ball joint from the injection mould (6), over a conical transition (51) constructed on the covering sleeve (5) and into a receiving groove (16) constructed in a collar (13) on the ball pin (1).

4. Process according to at least one of claims 1 to 3, characterised in that the space enclosed by the sealing bellows (4) is provided with a filling of lubricant before the ball pin (1) is inserted in the injection mould (6).

5. Process according to at least one of claims 1 to 4, characterised in that the sealing bellows (4) serves, during the injection moulding operation, to seal off the space enclosed by the said sealing bellows (4) from the molten mass of plastic filling up the mould recess cavity (63 and 64), through the fact that the said bellows is clamped-in between the ball bush (2) and the injection moulding tool (6).

6. Process according to claim 5, characterised in that the tool (6) has a supporting face (65) for sealing off the cavities (63 and 64) by means of the sealing bellows (4), which supporting face is configured in such a way that, in cooperation with a correspondingly shaped prolongation (24) of the ball bush (2), it fixes the said ball bush in the injection moulding tool in a defined position.

7. Process according to at least one of claims 1 to 6, characterised in that the plastic is introduced by means of a low-pressure injection-moulding process, preferably an internal gas pressure injection moulding process or a two-component process with a foam component.

8. Process according to at least one of claims 1 to 7, characterised in that, as the plastic, use is made of a reinforced, preferably fibre-reinforced or glass fibre-reinforced thermoplastic plastic.

9. Bearing bush (2) for use in the process according to at least one of claims 1 to 8, characterised in that that rim of the bearing bush (2) which surrounds the opening is provided with an annular bearing face (25) for the inner rim of that opening bead (41) of the sealing bellows (4) which is on the housing side.

10. Bearing bush (2) according to claim 9, characterised in that the contact face (25) is constructed on a prolongation (24) of the bearing bush (2), which prolongation extends obliquely outwards and at the same time forms a stop for the range of avertence of the ball pin (1).

11. Bearing bush (2) according to claim 9 or 10, characterised by a projection (21), which lies opposite the opening and is moulded onto the outside of the bearing bush (2) after the fashion of a pin, for fixing the said bearing bush (2) in position in the injection mould (6) and in the joint housing (3).

12. Bearing bush (2) according to at least one of claims 9 to 11, characterised by elevations (22, 23) and/or depressions constructed on the outside of the said bearing bush for stiffening the latter during the extrusion-coating operation and for securing the said bearing bush (2) in position in relation to the joint housing (3).

13. Bearing bush (2) according to claim 12, characterised in that the elevations (22) and/or depressions extend in a rib-like manner on at least one circle of longitude.

14. Bearing bush (2) according to claim 12, characterised in that the elevations (23) and/or depressions extend in a rib-like manner on at least one circle of latitude.

## Revendications

1. Procédé de fabrication d'une articulation à rotule se composant d'un pivot à rotule (1), d'une coquille de coussinet (2) et d'une cage d'articulation (3) et devant être équipée d'un soufflet d'étanchéité (4) disposé entre la cage (3) de l'articulation et le pivot à rotule (1), en particulier pour véhicules automobiles, par injection de matière plastique autour du pivot à rotule (1), qui est muni de la coquille de coussinet (2) placée sur la rotule (11) de l'articulation, dans un moule divisé (6) de coulée par injection,
caractérisé
en ce qu'avant de placer le pivot à rotule (1) dans le moule (6) de coulée par injection, le bourrelet (41) de l'ouverture, côté cage, du soufflet d'étanchéité (4) est positionné sur la coquille de coussinet (2) et est fixé par injection entre la coquille de coussinet (2) et la cage (3).

2. Procédé selon la revendication 1, caractérisé en ce que, avant de placer le pivot à rotule (1) dans le moule (6) de coulée par injection, le bourrelet (42) de l'ouverture, côté pivot, du soufflet d'étanchéité (4) est fixé sur un manchon de couverture (5) posé sur la tige filetée (14) du pivot à rotule (1).

3. Procédé selon la revendication 2, caractérisé en ce que, après enlèvement de l'articulation à rotule achevée du moule (6) de coulée par injection, le bourrelet (42) côté pivot, de l'ouverture, chargé par un anneau de serrage (43) est poussé sur une transition conique (51) réalisée sur le manchon de couverture (5) pour être inséré dans une rainure de logement (16) réalisée dans un collet (13) du pivot à rotule (1).

4. Procédé selon au moins l'une des revendications 1 à 3, caractérisé en ce que l'espace enveloppé par le soufflet d'étanchéité (4) est muni d'un remplissage de lubrifiant avant l'introduction du pivot à rotule (1) dans le moule (6) de coulée par injection.

5. Procédé selon au moins l'une des revendications 1 à 4, caractérisé en ce qu'au cours du processus de coulée par injection, le soufflet d'étanchéité (4) sert de garniture d'étanchéité de l'espace enveloppé par le soufflet d'étanchéité (4) par rapport à la masse fondue de matière plastique emplissant la cavité du moule (63 et 64) en étant enserré entre la coquille de coussinet (2) et l'outil (6) de coulée par injection.

6. Procédé selon la revendication 5, caractérisé en ce que l'outil (6) comporte une surface d'appui (65) pour rendre étanches les cavités (63 et 64) par le soufflet d'étanchéité (4), ladite surface étant conformée de manière qu'en coopération avec un prolongement (24) de forme correspondante de la coquille de coussinet (2), elle fixe celle-ci à une position définie dans l'outil de coulée par injection.

7. Procédé selon au moins l'une des revendications 1 à 6, caractérisé en ce que la matière plastique est introduite avec un composant moussant par un procédé de coulée par injection sous basse pression, de préférence un procédé de coulée par injection sous pression interne de gaz ou un procédé à deux composants.

8. Procédé selon au moins l'une des revendications 1 à 7, caractérisé en ce que la matière plastique utilisée est une matière thermoplastique armée, de préférence armée de fibres, notamment de fibres de verre.

9. Coquille de coussinet (2) destinée à être utilisée dans le procédé selon au moins l'une des revendications 1 à 8, caractérisé en ce que le bord de la coquille de coussinet (2) qui entoure l'ouverture est muni d'une surface annulaire d'appui (25) destinée au bord intérieur du bourrelet (41) de l'ouverture du soufflet d'étanchéité (4) qui se trouve côté cage.

10. Coquille de coussinet (2) selon la revendication 9, caractérisée en ce que la surface d'appui (25) est réalisée sur un prolongement (24) de la coquille de coussinet (2) qui est orienté obliquement vers l'extérieur et qui forme également une butée de la plage de pivotement du pivot à rotule (1).

11. Coquille de coussinet (2) selon la revendication 9 ou 10, caractérisée par une protubérance (21) en forme de tenon, venue de moulage, sur le côté extérieur de la coquille de coussinet (2) et qui est placée sur le côté opposé de celui de l'ouverture pour la fixation de la position de la coquille de coussinet (2) dans le moule (6) de coulée par injection et dans la cage (3) de l'articulation.

12. Coquille de coussinet (2) selon au moins l'une des revendications 9 à 11, caractérisée par des bossages (22, 23) et/ou des cavités réalisés sur son côté extérieur pour rigidifier la coquille de coussinet lors de l'enveloppement par injection et pour la fixation de la position de la coquille de coussinet (2) par rapport à la cage (3) de l'articulation.

13. Coquille de coussinet (2) selon la revendication 12, caractérisée en ce que les bossages (22) et/ou les cavités sont disposés à la manière de nervures sur au moins un cercle orienté en longueur.

14. Coquille de coussinet (2) selon la revendication 12, caractérisée en ce que les bossages (23) et/ou les cavités sont disposés à la manière de nervures sur au moins un cercle orienté en largeur.
